# EUROPÄISCHE PATENTSCHRIFT

(11) **EP 1 517 213 B1**
(45) Veröffentlichungstag und Bekanntmachung des Hinweises auf die Patenterteilung: **13.04.2016**
(21) Anmeldenummer: 04022052.7
(22) Anmeldetag: 16.09.2004
(51) Int. Cl.: B01F 15/00, B01F 15/04, G05D 11/13

(54) **Dosiergerät zur Herstellung einer Desinfektionsmittelbrauchslösung aus Konzentraten**
Dosing device for the production of a ready-to-use disinfectant solution from concentrates
Appareil de dosage pour la production à partir de concentrés d'une solution de produit désinfectant prête à l'emploi

(30) Priorität: 17.09.2003 DE 10342952
(43) Veröffentlichungstag der Anmeldung: 23.03.2005
(73) Patentinhaber: Schulz GmbH, 58540 Meinerzhagen (DE)
(72) Erfinder: Schulz, Hartmut, 58540 Meinerzhagen (DE)
(74) Vertreter: Patentanwälte Dörner & Kötter PartG mbB

(56) Entgegenhaltungen:
- EP-A- 0 802 164
- DE-U1- 20 009 961
- GB-A- 2 221 552
- US-A- 4 738 541
- US-A1- 2002 092 866

## Beschreibung

Die Erfindung betrifft ein Dosiergerät zur Herstellung einer Desinfektionsmittelgebrauchslösung aus Wasser und Konzentrat, wobei eine Dosierpumpe Konzentrat in einen Wasserauslauf eingibt.

Dosiereinrichtungen sind in vielfältiger Weise bekannt (vgl. bspw. US 4 738 541 A, US 2002/092866 A1, GB 2 221 552 A). Die Zubereitung von Desinfektionsmittelgebrauchslösungen, einschließlich von Reinigungsmittelgebrauchslösungen in Verbindung mit Trinkwassernetzen erfordert aber besondere Maßnahmen zur Verhinderung einer Verunreinigung des Trinkwassernetzes. Insbesondere muss jeder Rückfluss verhindert werden. Diese Regeln sind in DIN 1988, Teil 4 festgelegt. Besonders empfohlen ist hierfür eine Wasserzuführeinrichtung mit freiem Auslauf. Je nach Anwendungsfall ist dem Wasser zur Gewinnung der Gebrauchslösung eine unterschiedliche Menge Desinfektionsmittel oder Reinigungsmittel beizumischen. Hierzu ist die jeweilige Durchflussmenge des Wassers zu ermitteln. Überwiegend erfolgt die Durchflussmengenmessung elektronisch. Dies weist jedoch den Nachteil, dass elektronische Durchflussmengenmesser zwangsläufig eine Hysterese aufweisen, aus der sich Messfehler ergeben können. Aufgabe der Erfindung ist die Bereitstellung eines Dosiergeräts, das die Regeln zur Einhaltung der Trinkwassergüte erfüllt und eine vereinfachte Messung der Dosierung ermöglicht.

Diese Aufgabe wird nach der Erfindung durch die Merkmale des Patentanspruchs 1 gelöst.

Die Erfindung unterscheidet sich insofern vom Stand der Technik, als der freie Auslauf eine vollständige Sicherung gegen Rückfluss bietet Der konstante Durchfluss der Auslaufdüse erlaubt eine genaue und gleich bleibende Dosierung des Konzentrats allein durch Messung der Dosierung des Konzentrats. Eine Messung des Durchflusses des Wassers ist rücht erforderlich, da der Durchfluss konstant ist.

Eine Beherrschung von Störfällen wird dadurch erreicht, dass der Wasservorlaufbehälter eine Höchststandssonde enthält. Bei Erreichen des Höchstfüllstandes wird der Wasserzulauf gesperrt. Vor Entleerung des Wasservorlaufbehälters wird der Wasserzulauf nach Verstreichen einer konstanten Zeit wieder freigegeben, sodass in dem Wasservorlaufbehälter immer eine ausreichende Wassermenge vorhanden ist. Sollte der Wasserzulauf unterbrochen ist, so erfolgt nach Ablauf der Sperrzeit ein Alarm.

Eine vereinfachte Steuerung ergibt sich dadurch, dass der Wasservorlaufbehälter außerdem eine Mindeststandssonde enthält. Der konstante Durchfluss der Auslaufdüse erlaubt eine Einstellung des Vorlaufdurchflusses auf den Durchfluss der Auslaufdüse und damit die Einhaltung eines gleich bleibenden, mittleren Pegels in dem Vorlaufbehälter. Dadurch lässt sich die Schalthäufigkeit im Vorlauf reduzieren, sodass auf hochwertige Schaltventile verzichtet werden kann.

Die betriebsmäßige Einstellung wird dadurch erleichtert, dass der Durchlauf im Vorlaufbehälter im Wesentlichen auf den Wert des Durchflusses der Auslaufdüse einstellbar ist.

Zur Beherrschung von Störfällen ist weiter vorgesehen, dass der Vorlaufbehälter außerdem eine Bremssonde enthält.

Eine sichere Dosierung des Konzentrats wird dadurch erreicht, dass in den Wasserzulauf eine Dosierpumpe mündet, die an eine in einen Konzentratbehälter eintauchende Sauglanze angeschlossen ist.

Die Konzentratüberwachung wird dadurch sicher eingehalten, dass an die Dosierpumpe eine Konzentratüberwachung angeschlossen ist.

Zur einfachen Wartung und Reinigung sind (Rohr-)Leitungen und Komponenten des Dosiergerätes steckbar miteinander verbunden. Hierdurch ist der Zeit- und Kostenaufwand im Vergleich zu bekannten Geräten, die in der Regel mit Verschraubungen versehen sind, deutlich reduziert. Dies ist insbesondere bedeutsam, da für die meisten Einsatzbereiche des Gerätes regelmäßige Wartungen aber insbesondere auch Desinfektionen der Geräte vorgeschrieben sind.

Zwei Ausführungsbeispiele werden anhand der Zeichnungen erläutert, in denen darstellen:
Fig. 1 eine Funktionsgruppendarstellung eines ersten Ausführungsbeispiels und
Fig. 2 eine Funktionsgruppendarstellung eines zweiten Ausführungsbeispiels.

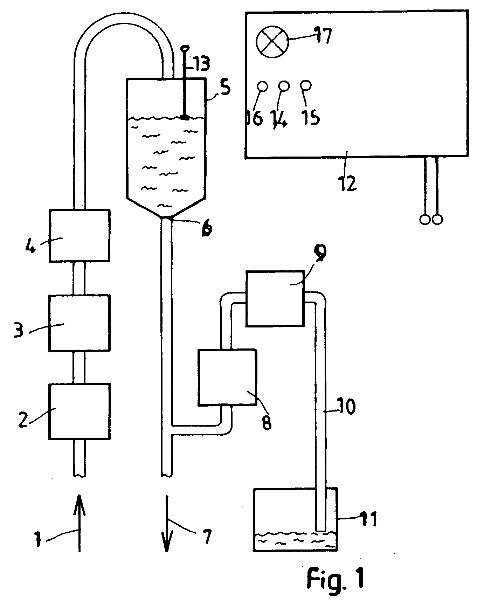

Das Dosiergerät nach der Erfindung besteht im Wesentlichen aus (Rohr-)Leitungen, und Komponenten, die mittels der Leitungen miteinander in Verbindung stehen. Bei dem ersten Ausführungsbeispiel nach Figur 1 ist ein Wasserzulauf 1 an ein Wasserversorgungsnetz angeschlossen. Der Wasserzulauf 1 ist über einen Schmutzfänger 2, einen Druckminderer 3 und ein Magnetventil 4 in einen Wasservorlaufbehälter 5 mit freiem Auslauf geführt. In diesen Wasservorlaufbehälter fällt das einlaufende Wasser über eine freie Strecke, sodass Einlauf und Auslauf getrennt sind. Der Wasservorlaufbehälter 5 enthält eine Sonde 13 für einen Höchstfüllstand. Eine Ausflussdüse 6 mit konstantem Durchfluss von z. B. 800 l/h ergibt einen konstanten Ausfluss über einen Auslauf 7, z. B. einen Schwenkauslauf. Durch Austausch der Ablaufdüse 6 sind andere konstante Durchflussmengen realisierbar. Die Durchflussmenge ist bestimmt von der in dem Behälter 5 befindlichen Wassersäule über der Auslaufdüse 6. Da die Wassersäule innerhalb einer geringen Schwankungsbreite als konstant angesehen werden kann, ergibt sich in Abhängigkeit von der jeweils gewählten Auslaufdüse 6 ein konstanter Durchfluss.

Die Sonde 13 ist an ein Steuergerät 12 angeschlossen. Die Füllstandsmessung über das Steuergerät 12 in Verbindung mit der Sonde 13 erfolgt elektronisch. Bei Erreichen des Höchstfüllstandes spricht die Sonde 13 an und der Wasserzulauf 1 sperrt. Nach Ablauf einer eingestellten Zeit wird der Wasserzulauf 1 vor Entleerung des Wasservorlaufbehälters 5 wieder freigegeben, sodass in dem Wasservorlaufbehälter immer eine ausreichende Wassermenge vorhanden ist. Die Entleerung des Wasservorlaufbehälters 5 lässt sich in Folge der Ausflussdüse 6 mit konstantem Durchfluss zeitabhängig erfassen, sodass der Wasserzulauf nach Verstreichen einer konstanten Zeit wieder freigegeben wird. Sollte einmal der Wasserzulauf unterbrochen sein, so erfolgt nach Ablauf einer Sperrzeit ein Alarm durch eine Signallampe 14.

In den Auslauf 7 mündet eine Dosiereinrichtung, die eine Konzentratüberwachung 8 und eine Dosierpumpe 9 umfasst. Die Dosierpumpe 9 ist erfindungsgemäß frequenzgesteuert. Dies bietet im Verhältnis zum üblichen An- und Ausschalten der Pumpe den Vorteil, dass eine homogene Lösung kontinuierlich förderbar ist, da ständig eine gleich bleibende Menge Konzentrat gefördert wird. Im Ausführungsbeispiel ist die Dosierpumpe 9 eine Schwingkolbenpumpe. Die Dosiereinrichtung umfasst weiterhin eine Sauglanze 10. Die Sauglanze 10 reicht in einen Konzentratbehälter 11 mit Reinigungsmitteln und/oder Desinfektionsmittel. Die Konzentratüberwachung 8 ist ebenfalls mit einer Signallampe 15 verbunden.

Das Steuergerät 12 dient zur Einschaltung und Einstellung des Dosiergeräts. Der Signalgeber 17 zeigt die Einschaltung und den Betrieb an. Es kann das Konzentrat eingestellt werden. Auch der Höchstfüllstand im Wasservorlaufbehälter 5 wird überwacht, und gegebenenfalls wird das Dosiergerät über das Magnetventil 4 abgeschaltet. Auch bei einem Konzentratmangel erfolgt eine Abschaltung. Eine weitere Signallampe 16 erlaubt die Anzeige eines allegemeinen Störfalls.

Es sind optische Alarmgeber beschrieben. Selbstverständlich können auch akustische Alarmgeber vorgesehen sein.

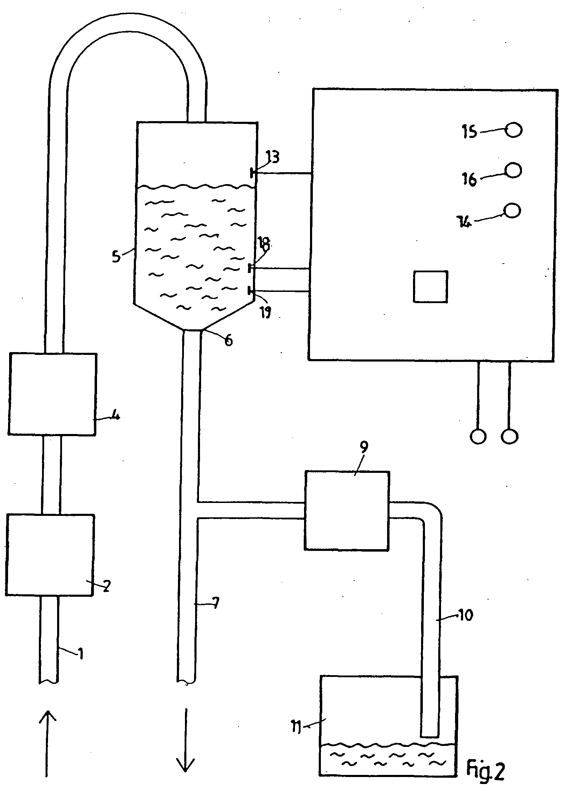

Bei dem zweiten Ausführungsbeispiel nach Figur 2 ist der Wasserzulauf 1 an ein Wasserversorgungsnetz angeschlossen. Der Wasserzulauf 1 ist über einen Schmutzfänger 2 und einem Magnetventil 4, sowie gegebenenfalls einen Druckminderer in einen Wasservorlaufbehälter 5 mit freiem Auslauf geführt. Der Wasservorlaufbehälter 5 enthält eine Sonde 13 für einen Höchststand, eine Sonde 18 für einen Mindeststand und eine Grenzsonde 19.

Eine Ausflussdüse 6 mit konstantem Durchfluss von z. B. 800 l/h ergibt einen konstanten Ausfluss über einen Ausfluss 7, z. B. einen Schwenkauslauf. In den Auslauf 7 mündet eine Konzentratpumpe 9, die eine Schwingkolbenpumpe ist und die mit einer Sauglanze 10 in einen Konzentratbehälter 11 mit Reinigungsmittel und/oder Desinfektionsmittel hineinreicht.

Die Sonden 13, 14, 15 sind an ein Steuergerät 12 angeschlossen. Der Durchfluss ist so einstellbar, dass er im Wesentlichen dem Durchfluss der Auslaufdüse 6 gleich ist. Infolge dessen liegt der Pegel in dem Wasservorlaufbehälter 5 nahezu immer zwischen der Höchststandsonde 13 und der Mindeststandsonde 18. Sollte der Höchststand überschritten werden, wird der Wasserzulauf 1 bei Ansprechen der Höchststandsonde 13 gesperrt und bei Erreichen der Mindeststandssonde 14 wieder eingeschaltet. Sollte ein Störzustand auftreten, insbesondere der Wasserzulauf unterbrochen sein, so erfolgt nach Ansprechen der Grenzsonde 19 ein Wassermangelalarm, der durch die Signallampe 14 angezeigt wird. Die Signallampe 15 zeigt einen Konzentratmangel an. Die Signallampe 16 zeigt den Einschaltzustand an.

Das Dosiergerät zur Herstellung einer Desinfektionsmittelgebrauchslösung aus Konzentraten ist sehr leicht montierbar und zerlegbar. Dies resultiert daraus, dass die gesamten Verbindungen der einzelnen Bestandteile des Dosiergerätes, also die (Rohr-)Leitungen und die Komponenten, die für die Dosierung und Mischung relevant sind, steckbar miteinander verbunden sind. Dies gilt für die Rohrabschnitte und deren Verbindung mit Wasservorlaufbehälter 5 und Auslaufdüse 6 sowie die Verbindung mit dem Auslauf 7. Ebenso ist die Dosiereinrichtung mit Steckverbindungen versehen, dass heißt die Verbindungen der Rohrabschnitte mit der Konzentratüberwachung 8, der Dosierpumpe 9 und der Sauglanze 10 sind gesteckt. Auch die Verbindung der Dosiereinrichtung mit dem Auslauf 7 ist gesteckt ausgebildet. Die leichte Zerlegbarkeit des Dosiergerätes ist besonders vorteilhaft hinsichtlich der Sterilisation des Gerätes. Da das Dosiergerät zum Einsatz in Krankenhäusern und Sozialeinrichtungen vorgesehen ist, sind vom Robert-Koch-Institut, Berlin, sowie von der Bundesanstalt für Materialprüfung, Berlin, regelmäßige Wartungen und Sterilisationen bzw. keimfreie Aufbereitungen des Gerätes vorgeschrieben. Hierzu ist es erforderlich, das Dosiergerät zu demontieren bzw. zu zerlegen. Die steckbare Ausbildung des Dosiergerätes schafft in diesem Fall eine Zeit- und Kostenersparnis zur Durchführung dieser vorgeschriebenen Arbeiten. Die Rohrabschnitte des Wasserzulaufs 1 und deren Verbindungen mit Schmutzfänger 2, Druckminderer 3 und Magnetventil 4 sind schraubbar unter Verwendung von Gummiflachdichtungen, woraus ebenfalls eine schnelle Zerlegbarkeit resultiert. Die Verbindungen sind zudem mit Sicherungen gegen selbstständiges Lösen versehen.

## Patentansprüche

1. Dosiergerät zur Herstellung einer Desinfektionsmittelgebrauchslösung aus Wasser und Konzentrat, wobei eine Dosierpumpe (9) Konzentrat in einen Wasserauslauf (7) eingibt, **dadurch gekennzeichnet, dass** ein Vorlaufbehälter (5) mit freiem Auslauf den Wasserauslauf (7) speist und dass der Vorlaufbehälter (5) eine Ausflussdüse (6) mit konstantem Durchfluss aufweist, und dass der Wasserauslauf (7) durchflussmengenmessungslos ausgebildet ist und die Dosierung allein durch Messung der Dosierung des Konzentrats erfolgt.

2. Dosiergerät nach Anspruch 1, **dadurch gekennzeichnet, dass** der Wasservorlaufbehälter (5) eine Höchststandsonde (13) enthält.

3. Dosiergerät nach Anspruch 1 oder 2, **dadurch gekennzeichnet, dass** der Wasservorlaufbehälter (5) eine Mindeststandsonde (18) enthält.

4. Dosiergerät nach einem der Ansprüche 1 bis 3, **dadurch gekennzeichnet, dass** der Vorlaufbehälter (5) eine Grenzsonde (15) enthält.

5. Dosiergerät nach einem der Ansprüche 1 bis 4, **dadurch gekennzeichnet, dass** in den Wasserauslauf (7) die Dosierpumpe (9) mündet, die an eine in einen Konzentratbehälter (11) eintauchende Sauglanze (10) angeschlossen ist.

6. Dosiergerät nach Anspruch 5, **dadurch gekennzeichnet, dass** an die Dosierpumpe (9) eine Konzentratüberwachung (8) angeschlossen ist.

7. Dosiergerät nach einem der Ansprüche 1 bis 6, **dadurch gekennzeichnet, dass** der Durchfluss im Vorlaufbehälter (5) im Wesentlichen auf den Wert des Durchflusses der Ausflussdüse (6) einstellbar ist.

8. Dosiergerät nach einem der Ansprüche 1 bis 7, **dadurch gekennzeichnet, dass** die Dosierpumpe (9) eine frequenzgesteuerte Schwingkolbenpumpe ist.

9. Dosiergerät nach einem der Ansprüche 1 bis 8, **dadurch gekennzeichnet, dass** (Rohr-)Leitungen und Komponenten steckbar miteinander verbunden sind.

## Claims

1. Dosing device for the production of a ready-to-use disinfectant solution from water and concentrate, wherein a dosing pump (9) introduces concentrate into a water outlet (7), **characterised in that** a feed tank (5) with a free outlet feeds the water outlet (7) and that the feed tank (5) has an outlet nozzle (6) with a constant flow and that the water outlet (7) does not measure the flow rate and dosing is carried out only by measuring the dose of the concentrate.

2. Dosing device according to claim 1, **characterised in that** the water feed tank (5) contains a maximum level sensor (13).

3. Dosing device according to claim 1 or 2, **characterised in that** the water feed tank (5) contains a minimum level sensor (18).

4. Dosing device according to one of claims 1 to 3, **characterised in that** the feed tank (5) contains a limit sensor (15).

5. Dosing device according to claims 1 to 4, **characterised in that** the dosing pump (9), which is connected to a suction lance (10) immersed in a concentrate container (11), leads to the water outlet (7).

6. Dosing device according to claim 5, **characterised in that** a concentrate monitor (8) is connected to the dosing pump (9).

7. Dosing device according to one of claims 1 to 6, **characterised in that** the flow in the feed tank (5) is substantially adjustable to the value of the flow of the outlet nozzle (6).

8. Dosing device according to one of claims 1 to 7, **characterised in that** the dosing pump (9) is a frequency-controlled vibrating piston pump.

9. Dosing device according to one of claims 1 to 8, **characterised in that** the (pipe)lines and components are insertably connected to each other.

## Revendications

1. Appareil de dosage pour la production, à partir d'eau et de concentré, d'une solution de produit désinfectant prête à l'emploi, sachant qu'une pompe de dosage (9) injecte du concentré dans une sortie d'eau (7), **caractérisé en ce qu'**un réservoir du circuit amont (5) à sortie libre alimente la sortie d'eau (7) et que le réservoir du circuit amont (5) présente une buse de sortie (6) à débit constant, et **en ce que** la sortie d'eau (7) est configurée sans mesure du débit et que le dosage est effectué uniquement en mesurant le dosage du concentré.

2. Appareil de dosage selon la revendication 1, **caractérisé en ce que** le réservoir d'eau du circuit amont (5) contient une sonde de niveau maximum (13).

3. Appareil de dosage selon la revendication 1 ou 2, **caractérisé en ce que** le réservoir d'eau du circuit amont (5) contient une sonde de niveau minimum (18).

4. Appareil de dosage selon l'une des revendications 1 à 3, **caractérisé en ce que** le réservoir du circuit amont (5) présente une sonde limitatrice (15).

5. Appareil de dosage selon l'une des revendications 1 à 4, **caractérisé en ce qu'**aboutit dans la sortie d'eau (7) la pompe de dosage (9) qui est raccordée à une lance d'aspiration (10) plongeant dans un réservoir de concentré (11).

6. Appareil de dosage selon la revendication 5, **caractérisé en ce que** contre la pompe de dosage (9) est raccordé un système de surveillance (8) du concentré.

7. Appareil de dosage selon l'une des revendications 1 à 6, **caractérisé en ce que** le débit dans le réservoir du circuit amont (5) est réglable essentiellement sur la valeur du débit de la buse de sortie (6).

8. Appareil de dosage selon l'une des revendications 1 à 7, **caractérisé en ce que** la pompe de dosage (9) est une pompe à piston oscillant pilotée par la fréquence.

9. Appareil de dosage selon l'une des revendications 1 à 8, **caractérisé en ce que** des lignes (tuyauteries) et composants sont reliées de manière emboîtable les uns avec les autres.
